# EUROPÄISCHE PATENTSCHRIFT

(11) **EP 1 550 606 B1**
(45) Veröffentlichungstag und Bekanntmachung des Hinweises auf die Patenterteilung: **10.12.2008**
(21) Anmeldenummer: 04030726.6
(22) Anmeldetag: 23.12.2004
(51) Int. Cl.: B64C 1/00, B64C 1/26

(54) **Seitenleitwerksanschluss**
Vertical stabilizer attachment
Fixation d'un empennage vertical

(30) Priorität: 29.12.2003 DE 10361391; 02.09.2004 US 606555 P
(43) Veröffentlichungstag der Anmeldung: 06.07.2005
(73) Patentinhaber: Airbus Deutschland GmbH, 21129 Hamburg (DE)
(72) Erfinder: Schöne, Wolfram, 21614 Buxtehude (DE)
(74) Vertreter: Maiwald Patentanwalts GmbH

(56) Entgegenhaltungen:
- DE-A1- 4 404 810
- MICHAEL C. Y. NIU: "Airframe Structural Design" 1988, CONMILIT PRESS LTD. , HONG KONG , XP002352144 ISBN: 962-7128-04-X * Seite 370 - Seite 371; Abbildung 10.3.4(b) *

## Beschreibung

Die Erfindung betrifft ein Leitwerk für Flugzeuge. Insbesondere betrifft die vorliegende Erfindung den Anschluss für ein Seitenleitwerk an den Rumpf eines Flugzeugs.

Die Außenform eines Flugzeuges bestimmt sich aus dem Zusammenspiel zwischen aerodynamischen und mechanischen oder statischen Notwendigkeiten oder Idealvorstellungen. Im Idealfall werden alle äußeren Bauteile in ihrer Form dem aerodynamischen Idealzustand angepasst. Dies hat zur Folge, dass die Gestaltungsmöglichkeiten der tragenden Struktur sowie der Anordnung der einzelnen Ausrüstungskomponenten des Flugzeuges durch dessen äußere Form beschränkt sind. Bei Verkehrsflugzeugen mit direkt am Heck angeschlossenen Leitwerken ist die Heckpartie überdurchschnittlich hohen mechanischen Belastungen ausgesetzt und muss andererseits besonders hohen aerodynamischen Anforderungen genügen, da hier die zur Steuerung des Flugzeuges notwendigen Höhen- und Seitenleitwerke untergebracht sind. Einerseits ist für die Bereitstellung eines den aerodynamischen Erfordernissen entsprechenden Leitwerks eine bestimmte äußere Leitwerks- und Heckform erforderlich, auf der anderen Seite sind alle für die Übertragung der entsprechenden Kräfte und für die Sicherstellung der entsprechenden Systemfunktionen für das Höhen- und Seitenleitwerk erforderlichen Bauteile auf äußerst engem Raum unterzubringen. Bekannte Lösungen von Flugzeughecks und insbesondere des Seitenleitwerksanschlusses an die Heckpartie des Rumpfes stellen somit immer vorteilhafte Kompromisse zwischen dem von den Gesetzen der Aerodynamik Geforderten und dem unter mechanischen Gesichtspunkten Ausführbaren dar.

Vorbekannte Ausführungsformen eines Anschlusses für ein Seitenleitwerk an den Rumpf eines Flugzeuges sind beispielsweise Mehrfach-Bolzenanschlüsse, wie sie bisher bei allen Airbusflugzeugen eingesetzt sind. Die DE 4404810 C2 beschreibt ein Rumpfheck für ein Verkehrsflugzeug, bei dem das Seitenleitwerk mithilfe von oben genannten Mehrfach-Bolzenanschlüssen an den Rumpf angebracht ist. Die in den dort gezeigten Beschlägen konzentrierten Leitwerkskräfte werden in die entsprechenden Gegenbeschläge an den entsprechenden Rumpfspanten eingeleitet und von da wiederum möglichst flächig in die Rumpfheckstruktur verteilt. Bei Flugzeugen, wie beispielsweise den Airbusflugzeugen, werden so jeweils drei linksseitig und drei rechtsseitig angeordnete Beschläge außerhalb der Strakkontur mit den rumpfseitigen Gegenbeschlägen verbolzt, um eine möglichst breite Anschlussbasis zu schaffen. Die durch diese Bolzenverbindungen gestörte Luftströmung wird mit einer umhüllenden aerodynamischen Verkleidung versehen, woraus allerdings ein unerwünschter Zusatzluftwiderstand resultiert.

Der bisherige Mehrfach-Bolzenanschluss des Seitenleitwerks bedingt eine Konzentration der flächig über die Holmquerschnitte verteilten Kraftflüsse in eine mehr oder weniger linienförmige, dazu noch schwerlinienversetzte Bolzenstruktur, deren rumpfseitige Gegenbeschläge dann wiederum diesen konzentrierten Kraftfluss in die Rumpfheckstruktur möglichst flächig einzuleiten haben.

Sowohl die Konzentrierung der Kräfte von einem großen Querschnitt, wie er bei den Holmen vorliegt, auf einen kleineren Querschnitt, wie er bei den Bolzen oder Beschlägen vorliegt, und die abermalige Umkehrung des Kraftflusses auf der Rumpfseite als auch das Zusatzmoment, das aus dem Schwerlinienversatz des Kraftflusses von den innerhalb der Leitwerkskontur liegenden Holmen und den außerhalb dieser Kontur liegenden Bolzen oder Beschlägen resultiert, kann ein Mehrgewicht bedingen.

Diese Bauweise führt zu relativ schweren Bolzen, Beschlägen und Anschlussstrukturen. Die aerodynamische Verkleidung dieser Anschlussstrukturen in der strömungstechnisch besonders kritischen Region der Leitwerkswurzel führt zu weiterem Zusatzgewicht und zu einem höheren aerodynamischen Widerstand.

Aus Michael C.N. Niu "Airframe Structural Design" 1988, Conmilit Press Ltd., Hong Kong, ISBN: 962-7128-04-X, Seiten 370-371 und Abbildung 10.3.4(b), ist eine Anordnung aus einem Rumpf eines Flugzeugs und einem über einen Anschluss an dem Rumpf angebrachten Seitenleitwerk bekannt. Rumpfspanten des Rumpfs und Seitenleitwerksholme des Seitenleitwerks sind dabei so über jeweilige im Stand etwa waagerecht verlaufende Endbeschläge mittels senkrecht verlaufender Bolzen miteinander verbunden, dass keine Verbindungsbolzen aus der Kontur herausragen.

Vor diesem Hintergrund ist es eine Aufgabe der Erfindung, einen Anschluss für ein Seitenleitwerk an den Rumpf eines Flugzeuges bereitzustellen, der sich durch verbesserte mechanische oder aerodynamische Eigenschaften auszeichnet.

Diese Aufgabe wird durch den Gegenstand des Anspruchs 1 gelöst. Vorteilhafte Weiterbildungen der Erfindung sind in den Unteransprüchen angegeben.

Gemäß einer beispielhaften Ausführungsform der vorliegenden Erfindung wird ein Anschluss für ein Seitenleitwerk an den Rumpf eines Flugzeuges bereitgestellt, wobei das Seitenleitwerk Seitenleitwerksholme aufweist und der Rumpf des Flugzeuges Rumpfspanten aufweist. Weiterhin sind die Seitenleitwerksholme und die Rumpfspanten zum Tragen des Seitenleitwerks ohne eine Bolzen-Verkleidungsstruktur miteinander verbunden, wobei ein Kraftfluss, der aus der Verbindung zwischen den Seitenleitwerksholmen und den Rumpfspanten resultiert, von den Seitenleitwerksholmen zu den Rumpfspanten und in den Rumpf weitgehend homogen verläuft.

Die erfindungsgemäße Anschlussstruktur stellt somit einen Anschluss eines Seitenleitwerks, welches auch ein über die Maßen dünnes Leitwerksprofil aufweisen kann, an das Rumpfheck eines Flugzeuges bereit, wobei der Anschluss einen gleichmäßigen, gewichtssparenden Kraftfluss von den Leitwerksholmen in den Rumpf gewährleistet und dabei gleichzeitig eine widerstandserzeugende Bolzen-Verkleidungsstruktur entfällt.

Gemäß einer weiteren beispielhaften Ausführungsform der vorliegenden Erfindung weist das Seitenleitwerk ein Seitenleitwerksprofil auf. Weiterhin weist der Rumpf eine aerodynamische Hohlkehle mit einem Hohlkehlprofil auf. Hierbei entspricht das Hohlkehlprofil des Rumpfes dem Seitenleitwerksprofil.

Diese beispielhafte Ausführungsform bietet den Vorteil, dass durch die Übereinstimmung der Profile von Hohlkehle und Seitenleitwerk eine aerodynamisch günstige Außenkontur des Anschlussbereiches für das Seitenleitwerk erreicht wird. Dies führt zu einer Verbesserung der Flugeigenschaften und zu einer Treibstoffersparnis.

Gemäß einem weiteren vorteilhaften Ausführungsbeispiel der vorliegenden Erfindung weist die Hohlkehle einen oberen Auslauf auf, der sich an der Trennstelle zwischen Rumpfstruktur und Seitenleitwerk befindet. Hierbei ist die Hohlkehle bis zum oberen Auslauf in der selben Weise aufgebaut wie der darunter liegende Teil des Rumpfes. Somit sind keine konstruktiven Änderungen in der Rumpfstruktur erforderlich, um das Seitenleitwerk an den Rumpf des Flugzeuges gemäß dieser vorteilhaften Ausführungsform der vorliegenden Erfindung anzuschließen.

Gemäß einer weiteren beispielhaften Ausführungsform der vorliegenden Erfindung überlappen die Seitenleitwerksholme und die Rumpfspanten einander paarweise und sind an den gegenseitigen Überlappungen miteinander verbunden. Indem diese gegenseitigen Überlappungen entsprechend großflächig ausgeführt werden, wird eine stabile und dauerhafte Verbindung zwischen Seitenleitwerksholmen und Rumpfspanten gewährleistet, die sich insbesondere durch einen gleichmäßigen Kraftfluss von den Leitwerksholmen in die Rumpfspanten auszeichnet.

Weitere Aufgaben und Vorteile der Erfindung ergeben sich aus den Unteransprüchen und aus der folgenden Beschreibung.

Im Folgenden wird die Erfindung anhand von Ausführungsbeispielen unter Bezugnahme auf die Zeichnungen näher beschrieben.
Fig. 1 zeigt einen Anschluss für ein Seitenleitwerk nach dem Stand der Technik.
Fig. 2 zeigt eine schematische Querschnittsdarstellung der Heckpartie eines Flugzeuges gemäß einer Ausführungsform der vorliegenden Erfindung.
Fig. 3 zeigt eine schematische Seitenansicht der Heckpartie eines Flugzeuges gemäß einer beispielhaften Ausführungsform der vorliegenden Erfindung.
Fig. 4 zeigt eine schematische Seitenansicht der Heckpartie eines Flugzeuges gemäß einer anderen beispielhaften Ausführungsform der vorliegenden Erfindung.
Fig. 5 zeigt eine schematische Darstellung eines Anschlusses für ein Seitenleitwerk an den Rumpf eines Flugzeuges gemäß einer Ausführungsform der vorliegenden Erfindung.
Fig. 6 zeigt eine schematische Querschnittsdarstellung der Heckpartie eines Flugzeuges gemäß einer anderen beispielhaften Ausführungsform der vorliegenden Erfindung.
Fig. 7 zeigt eine schematische Querschnittsdarstellung der Heckpartie eines Flugzeuges gemäß einer anderen beispielhaften Ausführungsform der vorliegenden Erfindung.
Fig. 8 zeigt eine schematische Seitenansicht der Heckpartie eines Flugzeuges gemäß einer anderen beispielhaften Ausführungsform der vorliegenden Erfindung.

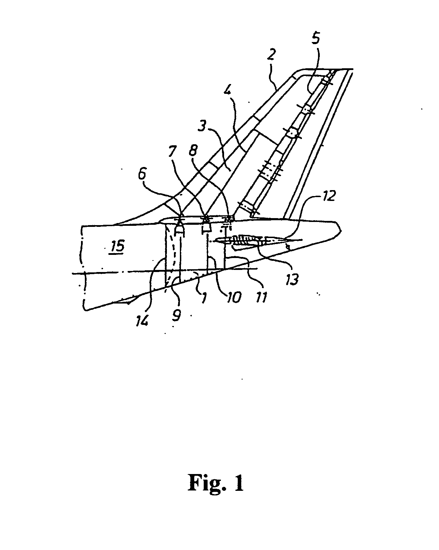

Fig. 1 zeigt einen Anschluss für ein Seitenleitwerk im Bereich des Rumpfhecks 1 eines Flugzeuges. Auf das Rumpfheck 1 ist ein Seitenleitwerk 2 aufgesetzt, welches die Seitenleitwerksholme 3, 4 und 5 aufweist. Das Rumpfheck oder der Rumpf 1 weist u. a. die Rumpfspanten 9, 10 und 11 auf. Das Seitenleitwerk ist mit seinen Seitenleitwerksholmen 3, 4 und 5 über die Anschlussbeläge 6, 7, 8 an den Rumpfspanten 9, 10, 11 angebracht. Der Umriss 12 deutet die Position des Höhenleitwerks und des Mittelkastens 13 an. Hierbei liegt die Stelle, an der der Rumpf 1 vom Mittelkasten 13 durchdrungen wird, hinter dem letzten der Rumpfspanten 9, 10, 11.

In diesem Zusammenhang gilt zu beachten, dass Angaben wie "hinter" oder "vor" stets näher zum Rumpfende hin oder näher zur Rumpfnase hin gelegen bedeuten.

Vor dem Rumpfspant 9 befindet sich der Druckspant 14, der die Druckkabine 15 nach hinten abschließt.

Die in der Fig. 1 gezeigten Beschläge 6, 7, 8 dienen zur Befestigung der Seitenleitwerksholme 3, 4, 5 an den Rumpfspanten 9, 10, 11 und führen zu einer Konzentration der Leitwerkskräfte an den Orten der Beschläge 6, 7, 8. Weiterhin sind die Beschläge 6, 7, 8 mit rumpfseitig angeordneten und in der Fig. 1 nicht dargestellten Beschlägen außerhalb der Strakkontur verbolzt. Damit diese Bolzenverbindungen die Luftströmung nicht stören, sind sie mit einer umhüllenden aerodynamischen Verkleidung versehen, woraus allerdings ein unerwünschter Zusatzwiderstand resultiert.

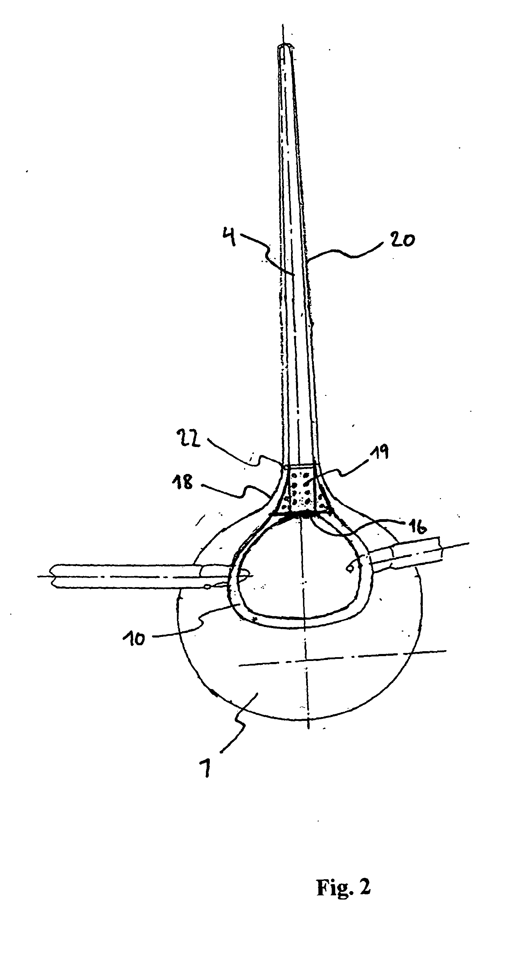

Fig. 2 zeigt eine schematische Querschnittsdarstellung der Heckpartie eines Flugzeuges gemäß einer beispielhaften Ausführungsform der vorliegenden Erfindung. Die erfindungsgemäße Leitwerksanschlussstruktur besteht rumpfseitig aus einer dem Leitwerksprofil entsprechenden, aerodynamisch optimierten Hohlkehle 18, die bis an deren oberen Auslauf 22, an dem sich die Trennstelle zwischen tragender Rumpfstruktur und dem Seitenleitwerk 20 befindet, in gleicher Schalenbauweise mit Spanten, Stringern und einer Außenhaut aufgebaut ist, wie das übrige Rumpfheck auch.

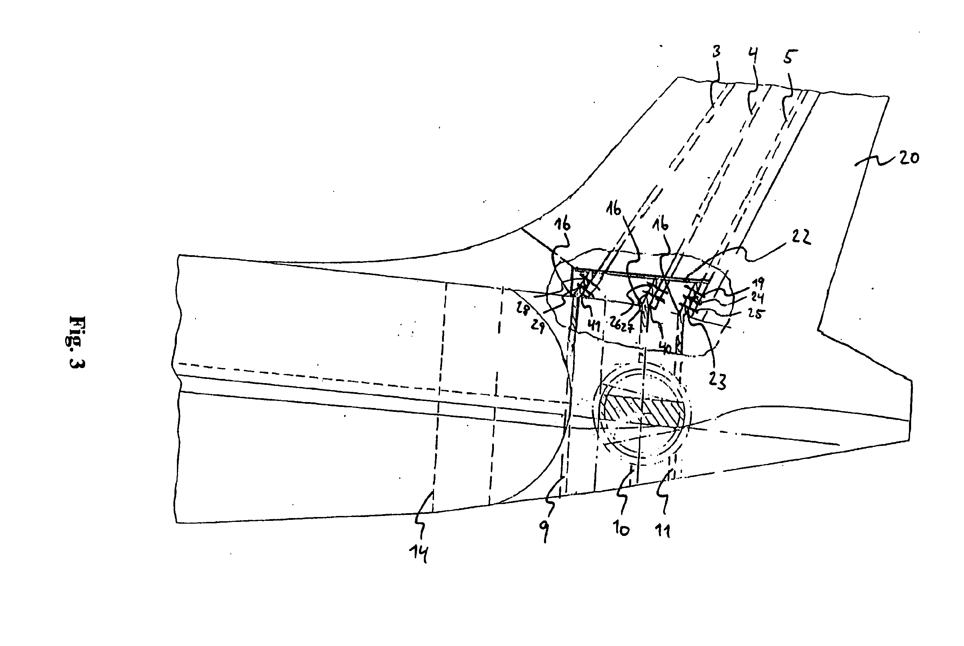

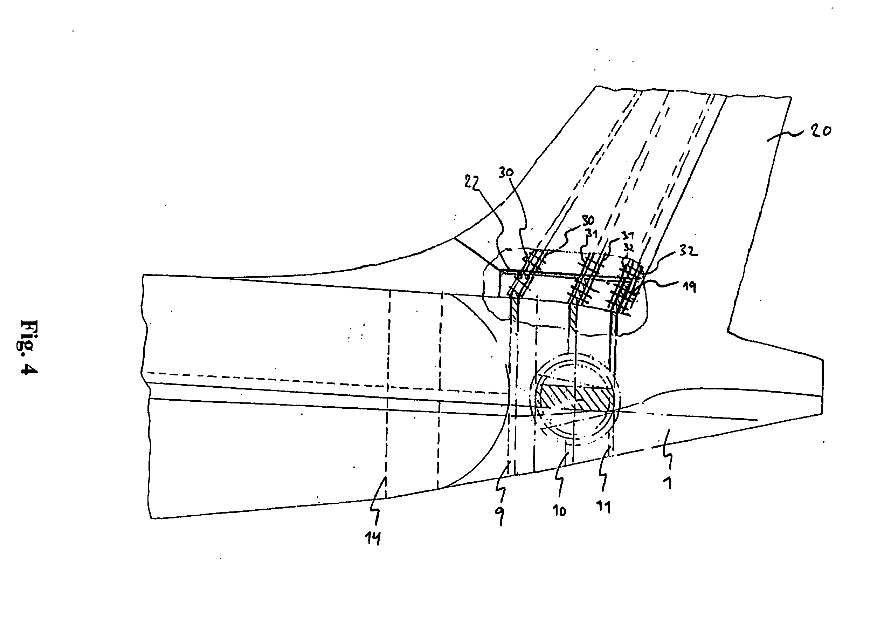

Das Seitenleitwerk 20 weist ein Seitenleitwerksprofil auf und der Rumpf oder das Rumpfheck 1 weist eine aerodynamische Hohlkehle 18 mit einem Hohlkehlprofil auf. Hierbei ist das Hohlkehlprofil dem Seitenleitwerksprofil angepasst. Allerdings weist, gemäß einer Ausführungsform der vorliegenden Erfindung, der rumpfseitige Anschlussspant 10 (wie auch die übrigen Rumpfspante 9 und 11, wie sie in den Figs. 3 und 4 zu sehen sind) an der Oberkante der örtlichen Rumpfheckkontur einen rückwärts gerichteten Knick 16 auf, der dem Anschlusswinkel des Seitenleitwerksholmes 4 (und entsprechend Figs. 3 und 4 den Anschlusswinkeln der Seitenleitwerksholme 3 und 5) entspricht.

Bei Neukonstruktionen sind im übrigen auch Schrägspante denkbar, welche entsprechend des Anschlusswinkels der Seitenleitwerksholme in den Rumpf eingebaut werden, so dass von einem Knick 16 in den Rumpfspanten 9, 10, 11 abgesehen werden kann.

Die Seitenleitwerksholme 3, 4, 5 ragen in die rumpfseitige Hohlkehle 18 hinein und können dort entweder direkt oder ein- bzw. doppellaschig in erforderlicher Querschnittsfläche durch lösbare oder unlösbare Verbindungselemente mit den Rumpfspanten 9, 10, 11 verbunden werden. Die Verbindungselemente 19 sind, gemäß einer Ausführungsform der vorliegenden Erfindung, in Form von Verschraubungen, Verlaschungen oder Verquetschungen ausgeführt. Selbstverständlich ist auch eine Variante denkbar, bei der die Rumpfspanten 9, 10, 11 in das Seitenleitwerk 20 hineinragen und dort mit den Seitenleitwerksholmen 3, 4, 5 verbunden werden.

Mit dieser Anschlusslösung wird ein homogener Kraftverlauf von den Seitenleitwerksholmen 3, 4, 5 in die Rumpfstruktur ohne aerodynamisch störende Außenbeschläge und deren Verkleidungen erreicht.

Fig. 3 zeigt eine schematische Seitenansicht der Heckpartie eines Flugzeuges gemäß einer beispielhaften Ausführungsform der vorliegenden Erfindung. Solche und andere Flugzeugtypen weisen einen vorwiegend zylindrischen Druckkabinenbereich auf, der durch einen Druckspant 14 nach hinten abgeschlossen ist. Die im Seitenleitwerk 20 integrierten Seitenleitwerksholme 3, 4, 5 überlappen die mit Spantknicken 16 versehenen Rumpfspanten 9, 10, 11. An den gegenseitigen Überlappungen von Rumpfspanten 9, 10, 11 und Seitenleitwerksholmen 3, 4, 5 bestehen direkte Holm-Spant-Anschlüsse 23, 40, 41, die sich unterhalb des Auslaufs 22 befinden.

Die Seitenleitwerksholme 3, 4, 5 reichen hierbei in die Hohlkehle 18 (aufgrund der Perspektive in Fig. 3 nicht zu erkennen) hinein und sind über lösbare Verbindungselemente 19, 24, 25, 26, 27, 28, 29 mit den Rumpfspanten 9, 10, 11 an den gegenseitigen Überlappungen verbunden.

Durch die gegenseitige Überlappung der Holme und Spanten und der damit zusammenhängenden großflächigen Verbindung zwischen Seitenleitwerk und Rumpf ergibt sich ein insgesamt weitgehend homogen verlaufender Kraftfluss, der aus der Verbindung zwischen den Seitenleitwerksholmen 3, 4, 5 und den Rumpfspanten 9, 10, 11 resultiert, und welcher innerhalb des Seitenleitwerkprofils verläuft. Somit wird ein gewichtsmindernder, weil frei von Mehrfach-Bolzenanschlüssen, und im Wesentlichen homogener Kraftverlauf von den Seitenleitwerksholmen 3, 4, 5 in die Rumpfstruktur ohne aerodynamisch störende Außenbeschläge und deren Verkleidungen erreicht. Ein Zusatzmoment bekannter Anschlusslösungen wird eliminiert, weil der Kraftfluss innerhalb des Leitwerkprofils nicht mehr in die außerhalb dieser Kontur liegenden Beschläge eingeleitet werden muss. Gewicht und aerodynamischer Widerstand der Bolzen-Verkleidung in der Leitwerkswurzel entfallen.

Es ist zu beachten, dass nicht alle im Heck des Flugzeugrumpfes 1 angebrachten Rumpfspanten zur Befestigung des Seitenleitwerks verwendet werden müssen. Weiterhin ist es denkbar, dass nicht alle im Seitenleitwerk 20 integrierten Seitenleitwerksholme für die Anbringung des Seitenleitwerks auf den Rumpfkörper 1 verwendet werden.

Fig. 4 zeigt eine schematische Seitenansicht der Heckpartie eines Flugzeuges gemäß einer anderen beispielhaften Ausführungsform der vorliegenden Erfindung. Hierin sind die im Heck des Rumpfes 1 angeordneten Rumpfspanten 9, 10, 11 über Doppellaschen-Anschlüsse 30, 31, 32 im Bereich der Hohlkehle 18 (aufgrund der Perspektive in Fig. 4 nicht zu erkennen) unterhalb des Auslaufs 22 mit den Seitenleitwerksholmen 3, 4, 5 des Seitenleitwerks 20 verbunden. Die Verbindung erfolgt hierbei dadurch, dass Doppellaschen 30, 31, 32 vorgesehen sind, in die von unten die Bereiche oberhalb des Knicks 16 der Rumpfspanten 9, 10, 11 und von oben die Seitenleitwerksholme 3, 4, 5 eingeschoben sind. Weiterhin sind lösbare oder unlösbare Verbindungselemente 19, 24, 25, 26, 27, 28, 29 (siehe auch Fig. 3) vorgesehen, die in Form von Vernietungen, Verschweißungen oder Verschraubungen ausgeführt sind.

Vorteilhafterweise erfolgt durch die in Fig. 4 dargestellte Verlaschung zwischen den Seitenleitwerksholmen 3, 4, 5 und den Rumpfspanten 9, 10, 11 dazu, dass kein Schwerlinienversatz des Kraftflusses in den das Seitenleitwerk 20 tragenden Bauteilen auftritt. Dies lässt sich dadurch erklären, dass die Seitenleitwerksholme 3, 4, 5 stumpf auf den Rumpfspanten 9, 10, 11 direkt aufsitzen oder zumindest direkt über den Rumpfspanten 9, 10, 11 angeordnet sind und der Kraftfluss weitgehend homogen verläuft.

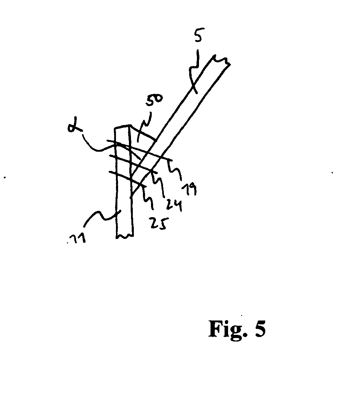

Fig. 5 zeigt eine schematische Darstellung eines Anschlusses für ein Seitenleitwerk an den Rumpf eines Flugzeuges gemäß einer Ausführungsform der vorliegenden Erfindung. Hierbei schließt der Rumpfspant 11 mit dem Seitenleitwerksholm 5 einen Winkel α ein. In den Bereich, der zwischen dem Rumpfspant 11 und dem Seitenleitwerksholm 5 definiert ist, ist ein keilförmiges Verbindungselement 50 eingeschoben. Der Seitenleitwerksholm 5 stößt an den Rumpfspant 11 an. Um Rumpfspant 11 und Seitenleitwerksholm 5 auf tragfähige Weise fest miteinander zu verbinden, sind Verbindungselemente 24, 25, 19 vorgesehen, welche beispielsweise in Form von Verschraubungen oder Vernietungen ausgeführt sind. Diese Ausführungsform bietet den Vorteil, dass kein Knick in dem Rumpfspant 11 vorgesehen ist, und trotzdem ein weitgehend homogen verlaufender Kraftfluss zwischen Seitenleitwerksholm 5 und Rumpfspant 11 vorliegt.

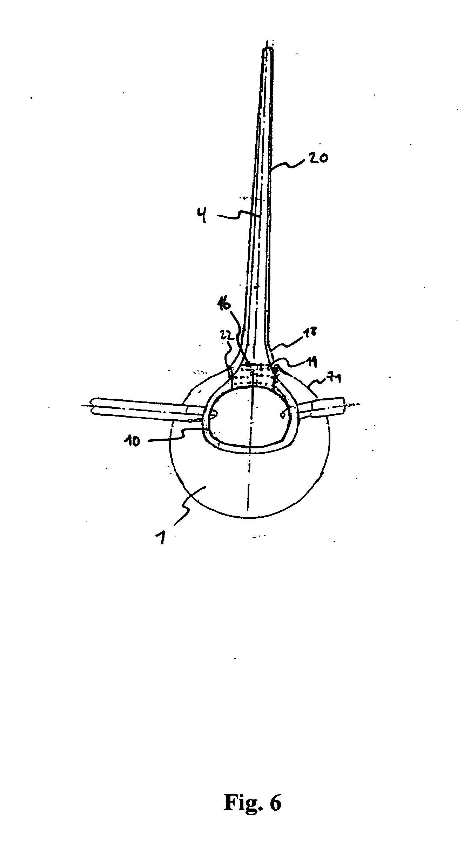

Fig. 6 zeigt eine schematische Querschnittsdarstellung der Heckpartie eines Flugzeuges mit dem Anschluss für ein Seitenleitwerk an den Rumpf des Flugzeuges mitgemäß einer beispielhaften Ausführungsform der vorliegenden Erfindung. Hierbei ist die Hohlkehle 18, die in den beispielhaften Ausführungsformen gemäß Figs. 2 - 5 integraler Bestandteil des Rumpfes ist, jedoch als integraler Bestandteil des Seitenleitwerks 20 ( SLW) ausgeführt. Die Trennstelle 22 zwischen SLW 20 und Rumpf 1 befindet sich hier am unteren Ende der SLW - Hohlkehle 18, so dass die Trennstelle 22 in einer Draufsicht die Form des SLW - Profils am unteren Hohlkehlende ebenso wie auch am entsprechenden Rumpfheck - Beplankungsausschnitt 71 abbildet.

Bei dieser Ausführungsform ragen die SLW - Holme 4 in das Rumpfheck hinein und werden dort mit den entsprechenden Vertikal- oder Schrägspanten 10 entweder direkt oder mit Laschen über die lösbaren Verbindungselemente 19 verbunden. Im Falle von Vertikalspanten 10 weisen die Spanten einen in Fig. 2 beschriebenen Spantknick 16 auf.

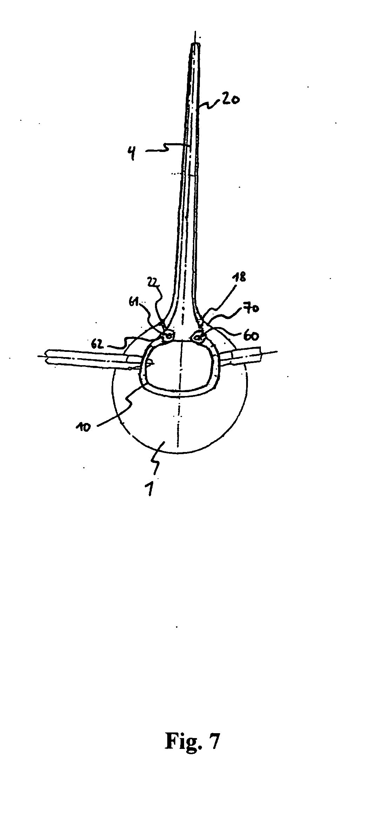

Fig.7 zeigt eine schematische Querschnittsdarstellung der Heckpartie eines Flugzeuges mit dem Anschluss für ein Seitenleitwerk an den Rumpf 1 des Flugzeuges gemäß einer anderen beispielhaften Ausführungsform der vorliegenden Erfindung. Hierbei ist die SLW - Hohlkehle 18 ebenso wie in Fig.6 integraler Bestandteil des SLW 20, und die Trennstelle 22 zwischen SLW 20 und Rumpfbeplankung 70 entspricht in ihrer Form und Lage der Rumpfbeplankung 71 der Ausführungsform in Fig.6.

Anders als in Fig.6 werden in Fig.7 die SLW - Holme 4 jedoch nicht mit den Rumpfspanten 10 verlascht, sondern vielmehr wird ein Mehrbolzenanschluss, bestehend aus verdeckten Bolzenverbindungen ohne Zusatzverkleidung 60, 61 und Fräsbeschlag oder Frässpant 62, verwendet, ohne jedoch aus Rumpf- und SLW - Strak herauszuragen und ohne einen Schwerlinienversatz zwischen leitwerksseitigen und rumpfseitigen Beschlägen zu erzeugen.

Somit entfällt auch in dieser erfindungsgemäßen Ausführungsform die störende Verkleidung der Bolzenanschlüsse außerhalb der Rumpf - und SLW - Strakkontour. Damit ist auch ein homogenerer Kraftfluß zwischen SLW - Holmen und Rumpfspanten gegeben, als dies beim Stand der Technik der Fall ist.

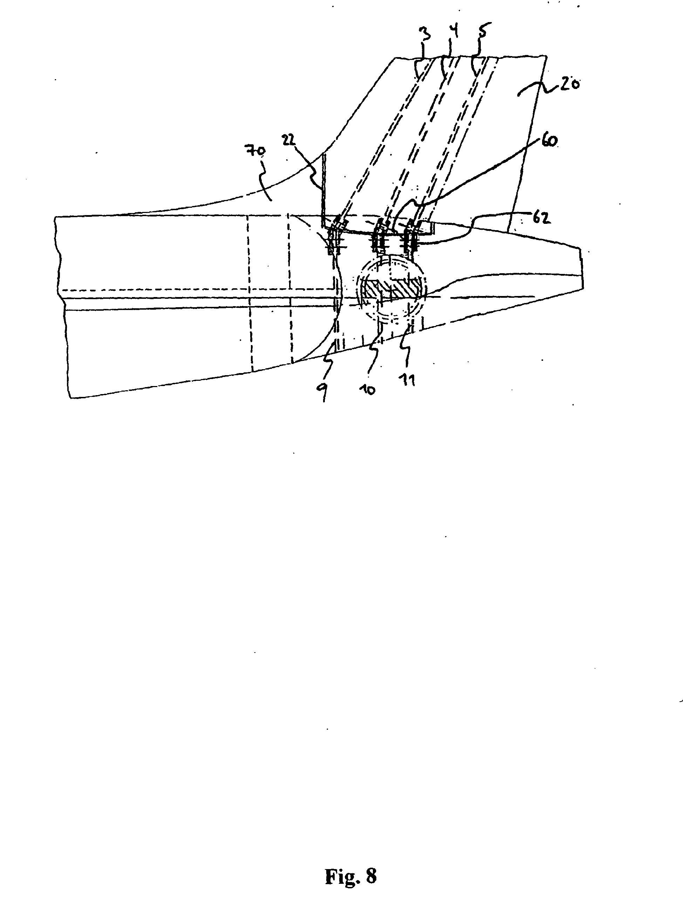

Fig. 8 zeigt eine schematische Seitenansicht der Heckpartie eines Flugzeuges gemäß der beispielhaften Ausführungsform der vorliegenden Erfindung, die in Fig. 7 abgebildet ist. Insbesondere ist hier der vorteilhafte Verlauf der Trennstelle 22 zwischen SLW 20 und Rumpfbeplankung 70 zu erkennen. Die SLW - Holme 3, 4, 5 sind über Mehrbolzenanschluss, bestehend aus verdeckten Bolzenverbindungen ohne Zusatzverkleidung 60 und Fräsbeschlag oder Frässpant 62, mit den Rumpfspanten 9, 10, 11 verbunden, ohne jedoch aus Rumpf- und SLW - Strak herauszuragen und ohne einen Schwerlinienversatz zwischen leitwerksseitigen und rumpfseitigen Beschlägen zu erzeugen.

## Patentansprüche

1. Anordnung aus einem Rumpf (1) eines Flugzeugs, und einem über einen Anschluss an dem Rumpf angebrachten Seitenleitwerk (2),
wobei das Seitenleitwerk Seitenleitwerksholme (3 ,4, 5) aufweist;
wobei der Rumpf Rumpfspanten (9, 10, 11) aufweist;
wobei die Seitenleitwerksholme (3, 4, 5) und die Rumpfspanten (9, 10, 11) zum Tragen des Seitenleitwerks (2) ohne eine Bolzen-Verkleidungsstruktur miteinander verbunden sind;
wobei die Seitenleitwerksholme (3, 4, 5) und die Rumpfspanten (9, 10, 11) einander paarweise überlappen und an den gegenseitigen Überlappungen miteinander verbunden sind, oder
wobei die Verbindung zwischen den Seitenleitwerksholme (3, 4, 5) und den Rumpfspanten (9, 10, 11) in Form einer einlaschigen oder doppellaschigen Verlaschung ausgeführt ist,
wodurch ein Kraftfluss, der aus der Verbindung zwischen den Seitenleitwerksholmen (3, 4) und den Rumpfspanten (9, 10, 11) resultiert, von den Seitenleitwerksholmen (3, 4, 5) zu den Rumpfspanten (9, 10, 11) und in den Rumpf (1) weitgehend homogen verläuft.

2. Anordnung nach Anspruch 1,
wobei das Seitenleitwerk (2) ein Seitenleitwerksprofil aufweist;
wobei der Rumpf (1) eine aerodynamische Hohlkehle (18) mit einem Hohlkehlprofil aufweist; und
wobei das Hohlkehlprofil dem Seitenleitwerksprofil entspricht.

3. Anordnung nach Anspruch 2,
wobei die Hohlkehle (18) einen oberen Auslauf (22) aufweist, der sich an der Trennstelle zwischen Rumpfstruktur und Seitenleitwerk (2) befindet; und
wobei die Hohlkehle (18) bis zum oberen Auslauf (22) in derselben Weise aufgebaut ist wie der darunter liegende Teil des Rumpfes (1).

4. Anordnung nach einem der vorhergehenden Ansprüche,
wobei die Rumpfspanten (9, 10, 11) einen oberen Bereich und einen unteren Bereich aufweisen;
wobei die Rumpfspanten in ihrem oberen Bereich einen nach hinten gerichteten Knick (16) aufweisen; und
wobei der Knick (16) dem Anschlusswinkel der Seitenleitwerksholme (3, 4, 5) an den unteren Bereich der Rumpfspanten (9, 10, 11) entspricht, so dass die Seitenleitwerksholme (3, 4, 5) und die Rumpfspanten (9, 10, 11) oberhalb des Knicks (16) im Wesentlichen parallel verlaufen.

5. Anordnung nach einem der Ansprüche 1 bis 3,
wobei die Rumpfspanten (9, 10, 11) und die Seitenleitwerksholme (3, 4, 5) einen Winkel einschließen; und
wobei der aufgrund des Winkels zwischen den Rumpfspanten (9, 10, 11) und den Seitenleitwerksholmen (3, 4, 5) eingeschlossene Bereich zumindest teilweise durch ein Verbindungselement (50) aufgefüllt wird.

6. Anordnung nach einem der vorhergehenden Ansprüche, wobei die Seitenleitwerksholme (3, 4, 5) in die Hohlkehle (18) hineinragen und dort mit den Rumpfspanten (9, 10, 11) verbunden sind.

7. Anordnung nach einem der Ansprüche 1 bis 5, wobei die Rumpfspanten (9, 10, 11) in das Seitenleitwerk (2) hineinragen und dort mit den Seitenleitwerksholmen (3, 4, 5) verbunden sind.

8. Anordnung nach einem der vorhergehenden Ansprüche, wobei der Kraftfluss, der aus der Verbindung zwischen den Seitenleitwerksholmen (3, 4, 5) und den Rumpfspanten (9, 10, 11) resultiert, innerhalb des Seitenleitwerkprofils verläuft.

9. Anordnung nach einem der vorhergehenden Ansprüche, wobei kein Schwerlinienversatz des Kraftflusses in den das Seitenleitwerk (2) tragenden Bauteilen auftritt.

10. Anordnung nach einem der vorhergehenden Ansprüche, wobei die Verbindung zwischen den Seitenleitwerksholme (3, 4, 5) und den Rumpfspanten (9, 10, 11) lösbar ist.

11. Anordnung nach einem der vorhergehenden Ansprüche,
wobei es sich bei dem Flugzeug um ein Verkehrsflugzeug handelt; und
wobei das Verkehrsflugzeug einen vorwiegend zylindrischen Druckkabinenbereich aufweist.

## Claims

1. Arrangement of a fuselage (1) of an aircraft, and a rudder unit (2) attached by a connection to the fuselage,
wherein the rudder unit comprises rudder unit spars (3, 4, 5);
wherein the fuselage comprises fuselage frames (9, 10, 11);
wherein the rudder unit (2) is supported by connecting the rudder unit spars (3, 4, 5) and the fuselage frames (9, 10, 11) to one another without a bolt-fairing structure;
wherein the rudder unit spars (3, 4, 5) and the fuselage frames (9, 10, 11) overlap one another in pairs and are connected to one another at mutual overlaps, or
wherein the connection between the rudder unit spars (3, 4, 5) and the fuselage frames (9, 10, 11) is realized with a single or double-sided clip,
thereby a flow of forces resulting from the connection between the rudder unit spars (3, 4) and the fuselage frames (9, 10, 11) extends in an essentially homogenous fashion from the rudder unit spars (3, 4, 5) to the fuselage frames (9, 10, 11) and into the fuselage (1).

2. Arrangement according to claim 1,
wherein the rudder unit (2) comprises a rudder unit profile; and
wherein the fuselage (1) comprises an aerodynamic groove (18) with a groove profile; and
wherein the groove profile corresponds to the rudder unit profile.

3. Arrangement according to claim 2,
wherein the groove (18) comprises an upper taper (22) that is arranged at a connecting point between the fuselage structure and the rudder unit (2); and
wherein the groove (18) is realized in the same fashion as the part of the fuselage (1) situated thereunder up to the upper taper (22).

4. Arrangement according to one of the preceding claims,
wherein the fuselage frames (9, 10, 11) comprise an upper region and a lower region;
wherein the fuselage frames contain a rearwardly directed offset (16) in their upper region, and
wherein the offset (16) corresponds to a connecting angle of the rudder unit spars (3, 4, 5) on the lower region of the fuselage frames (9, 10, 11) such that the rudder unit spars (3, 4, 5) and the fuselage frames (9, 10, 11) extend essentially parallel above the offset (16).

5. Arrangement according to one of the claim 1 to 3,
wherein the fuselage frames (9, 10, 11) and the rudder unit spars (3, 4, 5) comprise an angle; and
wherein a region formed due to the angle between the fuselage frames (9, 10, 11) and the rudder unit spars (3, 4, 5) is at least partially filled out by a connecting element (50).

6. Arrangement according to one of the preceding claims,
wherein the rudder unit spars (3, 4, 5) protrude into the groove (18) and are connected to the fuselage frames (9, 10, 11) there.

7. Arrangement according to one of the claim 1 to 5,
wherein the fuselage frames (9, 10, 11) protrude into the rudder unit (2) and are connected to the rudder unit spars (3, 4, 5) there.

8. Arrangement according to one of the preceding claims,
wherein the flow of forces resulting from the connection between the rudder unit spars (3, 4, 5) and the fuselage frames (9, 10, 11) extends within the rudder unit profile.

9. Arrangement according to one of the preceding claims,
wherein no offset a centroidal axis of the flow of forces occurs in the components that support the rudder unit (2).

10. Arrangement according to one of the preceding claims,
wherein the connection between the rudder unit spars (3, 4, 5) and the fuselage frames (9, 10, 11) is separable.

11. Arrangement according to one of the preceding claims,
wherein the aircraft is a commercial aircraft; and
wherein the commercial aircraft comprises a primarily cylindrical region of a pressurized cabin.

## Revendications

1. Agencement constitué d'un fuselage (1) d'un avion et d'un empennage vertical (2), monté par l'intermédiaire d'un raccord sur le fuselage, agencement dans lequel,
l'empennage vertical présente des longerons (3, 4, 5) d'empennage ;
le fuselage présente des couples de fuselage (9, 10, 11) ;
les longerons d'empennage vertical (3, 4, 5) et les couples de fuselage (9, 10, 11) sont assemblés entre eux pour supporter l'empennage vertical (2) sans une structure de carénage à boulons ;
les longerons d'empennage vertical (3, 4, 5) et les couples de fuselage (9, 10, 11) se chevauchent les uns les autres par paires et sont assemblés entre eux sur les chevauchements mutuels, ou
l'assemblage entre les longerons d'empennage vertical (3, 4, 5) et les couples de fuselage (9, 10, 11) est réalisé en forme d'un éclissage à éclisse simple ou double,
un flux de forces, qui résulte de l'assemblage entre les longerons d'empennage vertical (3, 4, 5) et les couples de fuselage (9, 10, 11), s'étendant de ce fait de façon largement homogène des longerons d'empennage vertical (3, 4, 5) en direction des couples de fuselage (9, 10, 11) et dans le fuselage (1).

2. Agencement suivant la revendication 1, dans lequel
l'empennage vertical (2) présente un profilé d'empennage ;
le fuselage (1) présente un congé aérodynamique (18) avec un profil de congé ; et
le profil de congé correspond au profil d'empennage vertical.

3. Agencement suivant la revendication 2, dans lequel
le congé (18) présente une sortie supérieure (22), qui se situe à l'endroit de séparation entre la structure du fuselage et l'empennage vertical (2) ; et
le congé (18), jusqu'à la sortie supérieure (22), est structuré de la même manière que la partie sous-jacente du fuselage (1).

4. Agencement suivant l'une des revendications précédentes, dans lequel
les couples de fuselage (9, 10, 11) présentent une zone supérieure et une zone inférieure ;
les couples de fuselage présentent dans leur zone supérieure un coude (16) dirigé vers l'arrière ; et
le coude (16) correspond à l'angle de raccordement des longerons d'empennage vertical (3, 4, 5) sur la zone inférieure des couples de fuselage (9, 10, 11), de sorte que les longerons d'empennage vertical (3, 4, 5) et les couples de fuselage (9, 10, 11) s'étendent de façon essentiellement parallèle au-dessus du coude (16).

5. Agencement suivant l'une des revendications 1 à 3, dans lequel
les couples de fuselage (9, 10, 11) et les longerons d'empennage vertical (3, 4, 5) forment un angle ; et
la zone, incluse en raison de l'angle entre les couples de fuselage (9, 10, 11) et les longerons d'empennage vertical (3, 4, 5), est remplie au moins en partie d'un élément d'assemblage (50).

6. Agencement suivant l'une des revendications précédentes, dans lequel les longerons d'empennage vertical (3, 4, 5) pénètrent dans le congé (18) et y sont assemblés avec les couples de fuselage (9, 10, 11).

7. Agencement suivant l'une des revendications 1 à 5, dans lequel les couples de fuselage (9, 10, 11) pénètrent dans l'empennage vertical (2) et y sont assemblés avec les longerons d'empennage vertical (3, 4, 5).

8. Agencement suivant l'une des revendications précédentes, dans lequel le flux de forces, qui résulte de l'assemblage entre les longerons d'empennage vertical (3, 4, 5) et les couples de fuselage (9, 10, 11), s'étend à l'intérieur du profilé d'empennage vertical.

9. Agencement suivant l'une des revendications précédentes, dans lequel aucun déport de ligne des centres de gravité du flux de forces ne se produit dans les composants qui supportent l'empennage vertical (2).

10. Agencement suivant l'une des revendications précédentes, dans lequel l'assemblage entre les longerons d'empennage vertical (3, 4, 5) et les couples de fuselage (9, 10, 11) est amovible.

11. Agencement suivant l'une des revendications précédentes, dans lequel
l'avion est un avion de ligne ; et
l'avion de ligne présente une zone de cabine pressurisée principalement cylindrique.
